# EUROPÄISCHE PATENTSCHRIFT

(11) **EP 1 829 024 B1**
(45) Veröffentlichungstag und Bekanntmachung des Hinweises auf die Patenterteilung: **24.04.2013**
(21) Anmeldenummer: 05813802.5
(22) Anmeldetag: 02.12.2005
(51) Int. Cl.: G10K 11/00, H04R 1/44

(54) **ELEKTROAKUSTISCHER WANDLER**
ELECTROACOUSTIC CONVERTER
CONVERTISSEUR ELECTROACOUSTIQUE

(30) Priorität: 23.12.2004 DE 102004062128
(43) Veröffentlichungstag der Anmeldung: 05.09.2007
(73) Patentinhaber: ATLAS ELEKTRONIK GMBH, 28305 Bremen (DE)
(72) Erfinder: BUSCH, Rainer, 26131 Oldenburg (DE)
(86) Internationale Anmeldenummer: PCT/EP2005/012906
(87) Internationale Veröffentlichungsnummer: WO 2006/072300

(56) Entgegenhaltungen:
- DE-A1- 2 615 684
- DE-A1- 2 709 647
- DE-A1- 4 339 798
- PATENT ABSTRACTS OF JAPAN Bd. 009, Nr. 276 (P-402), 2. November 1985 (1985-11-02) -& JP 60 120226 A (MITSUBISHI JUKOGYO KK), 27. Juni 1985 (1985-06-27)

## Beschreibung

Die Erfindung betrifft einen elektroakustischen Wandler für den Unterwassereinsatz der im Oberbegriff des Anspruchs 1 definierten Gattung.

Eine bekannte elektroakustische Wandleranordnung für eine Unterwasserantenne (DE 43 39 798 A1) weist mehrere, an einem Träger vertikal übereinander, äqudistant angeordnete Hydrofone auf, die zur vereinfachten Montage der Unterwasserantenne bei guten Empfangseigenschaften zusammen mit einem in Schalleinfallsrichtung hinter ihnen angeordneten Reflektor in einem akustisch transparenten Hartumguss aus einem im Gießverfahren verarbeitbaren Elastomer, vorzugsweise Polyurethan, eingebettet sind. Der Reflektor ist als Feder-Massesystem aus einer Masse und einer schallweichen Feder ausgebildet, wobei die Masse von einer Metallplatine und die schallweiche Feder von einer schallweichen Platte realisiert ist, die auf der von den Hydrofonen abgekehrten Rückseite der vorzugsweise aus Aluminium bestehenden Metallplatine angeordnet ist.

Ein bekanntes U-Boot mit einem einen Druckkörper und eine Außenhaut aufweisenden Bootskörper (DE 101 28 973 C1) ist mit einer Einrichtung zur Detektion von Schallimpulse aussendenden Torpedos ausgerüstet, die eine Vielzahl von omnidirektional empfangenden Hydrofonen aufweist, die über die Oberfläche des Bootskörpers beliebig verteilt und direkt auf dessen Außenhaut befestigt sind. Die Hydrofone sind an einer Signalverarbeitungseinheit angeschlossen, die zur Erfassung der Torpedoposition aus den Laufzeitdifferenzen zwischen den Ausgangssignalen ausgewählter Hydrofone die Peilrichtung zum Torpedo ermittelt. Mit Peilwinkeln, die von verschiedenen Hydrofongruppen, die vorzugsweise am Bootskörper weit voneinander entfernt liegen, ermittelt worden sind, wird durch trigonometrische Berechnung die Entfernung des Torpedos festgestellt.

Ein bekannter Unterwasserschallempfänger (DE 2615684 A1) weist einen Reflektor und einen vor der reflektierenden Fläche des Reflektors angeordneten Biegeplattenwandler des Zwei- oder Drei-Schichttyps auf. Der Biegeplattenwandler umfasst eine dünne flexible Membran, einen starren ringförmigen Träger und mehrere mit Elektroden beschichtete, piezoelektrische Schreiben. Die Membran ist mit ihrem Umfang auf dem Träger befestigt, der z.B. ein Messingring sein kann, und die piezoelektrischen Schreiben sind auf einer oder beiden Flächen der Membran aufgeklebt. Der Biegeplattenwandler ist sehr nahe der reflektierenden Fläche des deutlich flächengrößeren Reflektors angeordnet, ohne diesen zu berühren. Reflektor und Biegeplattenwandler sind von einer Harzschicht umhüllt, die gegenüber dem Biegeplattenwandler eine Mulde bildet.

Der Erfindung liegt die Aufgabe zugrunde, einen elektroakustischen Wandler mit einem Hydrofon zum bündigen Einbau in die Außenhaut eines Bootskörpers zu konzipieren, der nach Einbau innerhalb seines Frequenzbereichs einen ebenen Phasenverlauf ohne Phasensprünge und somit die Freifeldcharakteristik eines Hydrofons aufweist.

Die Aufgabe ist erfindungsgemäß durch die Merkmale im Anspruch 1 gelöst.

Der erfindungsgemäße elektroakustische Wandler hat den Vorteil, dass durch das Vorsehen des Reflektorrings und dessen auf die Hydrofonlage abgestimmte Anordnung der Phasenverlauf des Wandlers weitgehend eben ist und weder eine durch konstruktive Interferenzen hervorgerufene Welligkeit noch durch destruktive Interferenzen ausgelöste Phasensprünge aufweist. Damit ist eine sog. phasenbasierende Signalanalyse der Wandlersignale möglich, also eine Signalauswertung, die auf den Gleichlauf der ausgewählten Wandler basiert, wie z.B. die Algorithmen zum Bestimmen der Entfernung und Peilung eines Ziels mit mindestens drei ausgewählten Wandlern. Zudem ergibt sich bei dem erfindungsgemäßen Wandler die Möglichkeit, durch Verändern des Abstandsmaßes des Hydrofons, bezogen auf die der Schalleinfallsrichtung zugekehrten Vorderseite des Reflektorrings, die Mitten- oder Schwerpunktfrequenz des Wandlers mit dem Maximum der Empfangsempfindlichkeit je nach Wunsch zu niedrigen oder höheren Frequenzen zu verschieben, ohne dass der Phasenverlauf seine Linearität verliert. Der Wandler verhält sich in einen breiten Frequenzbereich, z.B. von 1 kHz bis 100 kHz, wie ein sich im Freifeld befindliches Hydrofon.

Zweckmäßige Ausführungsformen des erfindungsgemäßen elektroakustischen Wandlers mit vorteilhaften Weiterbildungen und Ausgestaltungen der Erfindung ergeben sich aus den weiteren Ansprüchen.

Gemäß einer vorteilhaften Ausführungsform der Erfindung ist der Reflektor aus einer Metallplatte, vorzugsweise Messingplatte, und einem der Metallplatte in Schalleinfallsrichtung vorgeordneten, auf der Metallplatte aufliegenden Hartschaumplatte zusammengesetzt. Der Reflektor dient dazu, ein gewünschtes Vor-/Rückverhältnis, den sog. Reflexionsfaktor, des Wandlers zu erzielen und den trägerseitg einfallenden Störschall zu unterdrücken.

Die Erfindung ist anhand eines in der Zeichnung dargestellten Ausführungsbeispiels im folgenden näher beschrieben. Es zeigen:
- Fig. 1: einen Längsschnitt eines elektroakustischen Wandlers,
- Fig. 2: ein Diagramm der Empfangsempfindlichkeit des Wandlers in Abhängigkeit von der Frequenz für unterschiedliche Einbaulagen des Hydrofons im Wandler gemäß Fig. 1.

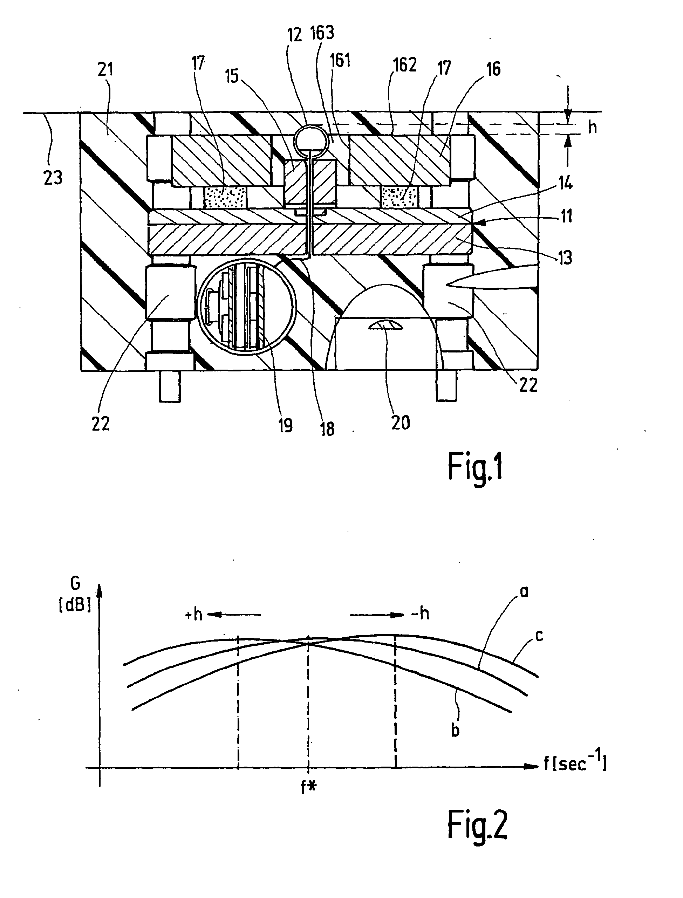

Der in Fig. 1 im Längsschnitt dargestellte elektroakustische Wandler für den Unterwassereinsatz weist einen Reflektor 11 und ein von einer hohlen Keramikkugel, einer sog. Kugelkeramik, gebildetes Hydrofon 12 auf, das in Schalleinfallsrichtung dem Reflektor 11 mit Abstand vorgeordnet ist. Der Reflektor 11 besteht aus einer Metallplatte 13, im Ausführungsbeispiel einer Messingplatte, auf deren zur Schalleinfallsrichtung weisenden Vorderseite eine Hartschaumplatte 14 aufgesetzt ist. Das Hydrofon 12 ist auf einem Abstandshalter 15 aus Hartschaum aufgesetzt, der sich am hydrofonfernen Ende auf der Hartschaumplatte 14 abstützt. Der als Feder-Massesystem wirkende Reflektor 11 dient dazu, ein gewünschtes Vor-/Rückverhältnis, den sog. Reflexionsfaktor, des Wandlers zu erzielen und Störschall, der auf Seiten eines den Wandler aufnehmenden Trägers generiert wird, weitgehend zu unterdrücken.

Dem Reflektor 11 ist ein zum Hydrofon 12 konzentrischer Reflektorring 16 vorgeordnet, dessen innere, einen Ringraum 163 umschließende Ringfläche 161 einen Radialabstand vom Hydrofon 12 einhält. Die räumliche Zuordnung von Reflektorring 16 und Hydrofon 12 ist dabei so vorgenommen, dass das Hydrofon 12 ein vorgegebenes Abstandsmaß h von der vom Reflektor 11 abgekehrten, der Schalleinfallsrichtung zugekehrten Stirnfläche 162 des Reflektorrings 16 aufweist. Ist das Abstandsmaß h positiv, so steht das Hydrofon 12 zumindest teilweise über die Stirnfläche 162 vor, ist das Abstandsmaß h negativ, so tritt das Hydrofon 12 zumindest teilweise hinter die Stirnfläche 162 zurück. Dabei stützt sich der Reflektorring 16 über einen oder mehrere Abstandshalter 17 aus Hartschaum auf der Hartschaumplatte 14 des Reflektors 11 ab. Im Ausführungsbeispiel der Fig. 1 steht das Hydrofon 12 teilweise über die vordere Stirnfläche 162 des Reflektorrings 16 vor, wobei das Abstandsmaß h den Abstand des zur Schalleinfallsrichtung vordersten Punktes auf der Kugeloberfläche von der Stirnfläche 162 angibt. In dieser Einbaulage weist der Wandler über seinen Frequenzbereich von beispielsweise 1 kHz bis 100 kHz eine Empfangsempfindlichkeit G auf, wie sie im Diagramm der Fig. 2 durch die Kurve a schematisiert dargestellt ist. Das Maximum der Empfangsempfindlichkeit des Wandlers liegt bei der Schwerpunkts- oder Mittenfrequenz f*.

Durch Veränderung der Einbaulage des Hydrofons 12, was vornehmlich durch Änderung der Höhe des Abstandshalters 15 erfolgt, kann das Empfindlichkeitsmaximum des Wandlers zu höheren oder tieferen Frequenzen verschoben werden. Wird das Abstandsmaß h vergrößert, so verschiebt sich das Maximum der Empfangsempfindlichkeit zu tieferen Frequenzen, wie dies durch Pfeil +h in Fig. 2 angedeutet ist. Die Empfangsempfindlichkeit des Wandlers als Funktion der Frequenz verläuft dann beispielhaft gemäß Kurve b in Fig. 2. Durch Verkürzung der Höhe des Abstandshalters 15 kann das Hydrofon 12 auch hinter die vordere Stirnfläche 162 des Reflektorrings 16 zurücktreten, wobei das Abstandsmaß h negative Werte annimmt. In diesem Fall verschiebt sich das Maximum der Empfangsempfindlichkeit des Wandlers hin zu höheren Frequenzen, wie dies durch den Pfeil -h in Fig. 2 angedeutet ist. Liegt das Hydrofon 12 vollständig in dem inneren Ringraum 163 des Reflektorrings 16 ein und tritt es um ein bestimmtes Maß -h hinter die vordere Stirnfläche 162 des Reflektorrings 16 zurück, so besitzt der Wandler eine Empfangsempfindlichkeit in Abhängigkeit von der Frequenz, wie sie beispielhaft durch die Kurve c in Fig. 2 dargestellt ist. Die Dicke des Reflektorrings 16 ist auf das Frequenzband des Wandlers so abgestimmt, dass die Linearität der Empfangsempfindlichkeit erhalten bleibt, der Reflektorring 16 also im gesamten Frequenzband wie ein nahezu idealer Reflektor wirkt.

Das Hydrofon 12 ist in bekannter Weise über elektrische Anschlussleiter 18, die zentral durch den Abstandshalter 15, die Hartschaumplatte 14 und die Metallplatte 13 hindurchgeführt sind, an einer Elektronik 19 angeschlossen, die ihrerseits über einen in Fig. 1 nur angedeuteten Stecker 20 kontaktierbar ist.

Alle vorstehend beschriebenen Komponenten des elektroakustischen Wandlers sind in einen Umguß 21 aus schalltransparentem Kunststoff eingeschlossen. Als Kunststoff wird ein im Gießverfahren verarbeitbare Elastomer, vorzugsweise Polyurethan, verwendet. Zwecks Befestigung des elektroakustischen Wandlers auf einem Träger sind im Umguß 21 Befestigungsmittel 22 vorgesehen. Solche Befestigungsmittel 22 sind beispielsweise im Umguß 21 ausgeformte Durchgangskanäle durch welche Befestigungsbolzen hindurchgeführt werden können.

Der vorstehend beschriebene elektroakustische Wandler ist insbesondere für den Anbau an den Bootskörper eines U-Boots konzipiert, wobei der Wandler, genauer die zur Schalleinfallsrichtung weisende Voderseite des Umgusses 21, bündig mit der Außenhaut des U-Bootkörpers in die Außenhaut eingesetzt und am Druckkörper des U-Bootkörpers befestigt ist. Die Außenhaut des Bootkörpers ist in Fig. 1 mit 23 angedeutet.

## Patentansprüche

1. Elektroakustischer Wandler mit einem Reflektor (11) und einem vom Reflektor (11) axial beabstandeten, in Schalleinfallsrichtung dem Reflektor (11) vorgeordneten, als keramische Hohlkugel ausgebildeten Hydrofon (12), **dadurch gekennzeichnet, dass** dem Reflektor (11) ein zum Hydrofon (12) konzentrischer Reflektorring (16) vorgeordnet ist, dessen innere Ringfläche (161) einen Radialabstand zum Hydrofon (12) einhält, und dass die räumliche Zuordnung von Hydrofon (12) und Reflektorring (16) so vorgenommen ist, dass das Hydrofon (12) in vorgebbarem Abstandsmaß (h) zu der vom Reflektor (11) abgekehrten Stirnfläche (162) des Reflektorrings (16) angeordnet ist.

2. Wandler nach Anspruch 1, **dadurch gekennzeichnet, dass** das Hydrofon (12) mit einem positiven Abstandsmaß (h) zumindest teilweise über die Stirnfläche (162) des Reflektorrings (16) vorsteht.

3. Wandler nach Anspruch 1, **dadurch gekennzeichnet, dass** das Hydrofon (12) mit einem negativen Abstandsmaß (h) hinter diese Stirnfläche (162) des Reflektorrings (16) zurücktritt.

4. Wandler nach einem der Ansprüche 1 - 3, **dadurch gekennzeichnet, dass** das Hydrofon (12) zur räumlichen Zuordnung mittels eines Abstandshalters (15) aus Hartschaum auf dem Reflektor (11) abgestützt ist.

5. Wandler nach einem der Ansprüche 1 - 4, **dadurch gekennzeichnet, dass** der Reflektorring (16) über mindestens einen Abstandshalter (17) aus Hartschaum auf dem Reflektor (11) abgestützt ist.

6. Wandler nach einem der Ansprüche 1 - 5, **dadurch gekennzeichnet, dass** die Dicke des Reflektors (11) auf den vom Hydrofon (12) abgedeckten Frequenzbereich abgestimmt ist.

7. Wandler nach einem der Ansprüche 1 - 6, **dadurch gekennzeichnet, dass** der Reflektorring (16) aus Hartschaum besteht.

8. Wandler nach einem der Ansprüche 1 - 7, **dadurch gekennzeichnet, dass** der Reflektor (11) aus einer Metallplatte (13), vorzugsweise einer Messingplatte, und einer die Metallplatte (13) auf deren der Schalleinfallsrichtung zugekehrten Vorderseite überdeckenden Hartschaumplatte (14) besteht.

9. Wandler nach einem der Ansprüche 1 - 8, **dadurch gekennzeichnet, dass** alle Wandlerkomponenten, wie Reflektor (11), Reflektorring (16), Abstandshalter (15) und Hydrofon (12), in einem Umguß (21) aus schalltransparentem Kunststoff, insbesondere aus einem im Gießverfahren verarbeitbaren, elastischen Elastomer, eingeschlossen sind und dass im Umguß (21) Befestigungsmittel (22) zum Befestigen des Wandlers eingegossen sind.

10. Wandler nach Anspruch 9, **gekennzeichnet durch** seinen Anbau an einen einen Druckkörper und eine Außenhaut (23) aufweisenden Bootskörper eines U-Boots in einer solchen Weise, dass die der Schalleinfallsrichtung zugekehrte Vorderseite des Umgusses (21) bündig mit der Außenhaut des Boötkörpers ist.

## Claims

1. Electroacoustic transducer with a reflector (11) and a hydrophone (12) formed as a hollow ceramic ball, which is axially spaced from the reflector (11) and arranged ahead of the reflector (11) in the direction of sound incidence, **characterised by** that a reflector ring (16) concentric to the hydrophone (12) is arranged ahead of the reflector (11), the inner ring surface (161) of which ring is at a radial distance from the hydrophone (12), and that the spatial assignment of hydrophone (12) and reflector ring (16) is undertaken such that the hydrophone (12) is arranged at a predeterminable distance dimension (h) from the face surface (162) of the reflector ring (16) facing away from the reflector (11).

2. Transducer according to claim 1, **characterised by** that the hydrophone (12) protrudes with a positive distance dimension (h) at least partially over the face surface (162) of the reflector ring (16).

3. Transducer according to claim 1, **characterised by** that the hydrophone (12) retreats with a negative distance dimension (h) behind this face surface (162) of the reflector ring (16).

4. Transducer according to one of claims 1 to 3, **characterised by** that the hydrophone (12) is supported for spatial assignment by means of a spacer (15) of hard foam on the reflector (11).

5. Transducer according to one of claims 1 to 4, **characterised by** that the reflector ring (16) is supported via at least one spacer (17) of hard foam on the reflector (11).

6. Transducer according to one of claims 1 to 5, **characterised by** that the thickness of the reflector (11) is coordinated to the frequency range covered by the hydrophone (12).

7. Transducer according to one of claims 1 to 6, **characterised by** that the reflector ring (16) consists of hard foam.

8. Transducer according to one of claims 1 to 7, **characterised by** that the reflector (11) consists of a metal plate (13), preferably a brass plate, and a hard foam plate (14) covering the metal plate (13) on its front side facing the direction of sound incidence.

9. Transducer according to one of claims 1 to 8, **characterised by** that all transducer components, such as reflector (11), reflector ring (16), spacer (15) and hydrophone (12), are enclosed in an encapsulation (21) of sound-transparent synthetic material, in particular of an elastic elastomer that can be processed in a casting process, and that attachment means (22) for attaching the transducer are cast in the encapsulation (21).

10. Transducer according to claim 9, **characterised by** its mounting on a ship hull of a submarine having a pressure hull and an outer skin (23) in such a way that the front side of the encapsulation (21) facing the direction of sound incidence is flush with the outer skin of the ship hull.

## Revendications

1. Convertisseur électroacoustique avec un réflecteur (11) et un hydrophone (12), formé en tant que boule creuse en céramique, espacé axialement du réflecteur (11), en amont du réflecteur (11) dans la direction d'incidence du son, **caractérisé en ce qu'**un anneau de réflecteur (16) concentrique par rapport à l'hydrophone (12) est placé en amont du réflecteur (11), dont la surface d'anneau intérieure (161) respecte un écart radial par rapport à l'hydrophone (12), et **en ce que** la corrélation dans l'espace de l'hydrophone (12) et de l'anneau de réflecteur (16) est effectuée de sorte que l'hydrophone (12) est disposé à une grandeur d'écart (h) prédéfinissable par rapport à la surface frontale (162) de l'anneau de réflecteur (16) détournée du réflecteur (11).

2. Convertisseur selon la revendication 1, **caractérisé en ce que** l'hydrophone (12) dépasse avec une grandeur d'écart (h) positive au moins partiellement de la surface frontale (162) de l'anneau de réflecteur (16).

3. Convertisseur selon la revendication 1, **caractérisé en ce que** l'hydrophone (12) est en retrait avec une grandeur d'écart (h) négative derrière cette surface frontale (162) de l'anneau de réflecteur (16).

4. Convertisseur selon l'une des revendications 1 à 3, **caractérisé en ce que**, pour la corrélation dans l'espace, l'hydrophone (12) est appuyé sur le réflecteur (11) au moyen d'une pièce d'écartement (15) en mousse rigide.

5. Convertisseur selon l'une des revendications 1 à 4, **caractérisé en ce que** l'anneau de réflecteur (16) est appuyé sur le réflecteur (11) via au moins une pièce d'écartement (17) en mousse rigide.

6. Convertisseur selon l'une des revendications 1 à 5, **caractérisé en ce que** l'épaisseur du réflecteur (11) est adaptée à la plage de fréquence couverte par l'hydrophone (12).

7. Convertisseur selon l'une des revendications 1 à 6, **caractérisé en ce que** l'anneau de réflecteur (16) est constitué de mousse rigide.

8. Convertisseur selon l'une des revendications 1 à 7, **caractérisé en ce que** le réflecteur (11) est constitué d'une plaque métallique (13), de préférence une plaque en laiton, et d'une plaque de mousse rigide (14) recouvrant la plaque métallique (13) sur sa face avant tournée vers la direction d'incidence du son.

9. Convertisseur selon l'une des revendications 1 à 8, **caractérisé en ce que** tous les composants du convertisseur, tels que le réflecteur (11), l'anneau de réflecteur (16), la pièce d'écartement (15) et l'hydrophone (12) sont encapsulés dans un revêtement coulé (21) en matière plastique transparente au son, en particulier en un élastomère élastique pouvant être traité par un procédé de coulée, et **en ce que** dans le revêtement coulé (21) des moyens de fixation (22) sont coulés pour fixer le convertisseur.

10. Convertisseur selon la revendication 9, **caractérisé par** son montage sur une coque de navire d'un sous-marin présentant une coque épaisse et un bordé extérieur (23) de telle manière que la face avant du revêtement coulé (21) tournée vers la direction d'incidence du son forme une surface plane avec le bordé extérieur de la coque de navire.
